# EUROPEAN PATENT APPLICATION

(11) **EP 4 794 185 A1**
(43) Date of publication of application: **19.08.2026**
(21) Application number: 24876917.6
(22) Date of filing: 24.07.2024
(51) Int. Cl.: H02M 3/28, G01N 27/447

(54) **HIGH-VOLTAGE ELECTRIC POWER SUPPLY DEVICE FOR MICROCHIP ELECTROPHORESIS DEVICE, AND MICROCHIP ELECTROPHORESIS DEVICE**

(30) Priority: 11.10.2023 JP 2023176227
(71) Applicant: SHIMADZU CORPORATION, Kyoto-shi, Kyoto 604-8511 (JP)
(72) Inventor: MINAMI, Takahiro, Kyoto-shi, Kyoto 604-8511 (JP)
(74) Representative: Mewburn Ellis LLP
(86) International application number: PCT/JP2024/026448
(87) International publication number: WO 2025/079316

(57) **Abstract**

A high-voltage power supply device capable of supplying a high voltage to a microchip electrophoresis system comprises a circuit board, a plurality of high-voltage generation circuits arranged on an upper surface (first surface) of the circuit board, and a plate-shaped shield part arranged on the first surface side of the circuit board. Each high-voltage generation circuit has a transformer, the plurality of high-voltage generation circuits are arranged between the first surface of the circuit board and the shield part 2, and a plate surface of the shield part is arranged parallel to a coil axis of each transformer.

## Description

### TECHNICAL FIELD

The present invention relates to a power supply device that supplies a high voltage to a microchip electrophoresis system, and a microchip electrophoresis system equipped with the power supply device.

### BACKGROUND ART

Analysis methods for samples using microchip electrophoresis are known. In a microchip electrophoresis system, a sample solution is injected into a minute flow path formed on a microchip. Then, high voltage (several kV, several tens of kV) is applied to both ends of the flow path into which the sample solution has been injected, thereby causing electrophoresis. By electrophoresis, components (charged substances) contained in the sample solution are separated due to differences in mobility based on size. The components separated by electrophoresis are detected by a detector. By using microchip electrophoresis, substances such as DNA and proteins can be analyzed, for example.

Patent Document 1 below discloses a microchip electrophoresis system.

Patent Document 1: JP 2023-105739 A

### SUMMARY OF INVENTION

### PROBLEMS TO BE SOLVED BY THE INVENTION

A microchip electrophoresis system includes a high-voltage power supply device for applying a high voltage to terminals provided on a microchip. Since a plurality of terminals are provided in a flow path formed on the microchip, the high-voltage power supply device is provided with a plurality of high-voltage generation circuits corresponding to the plurality of terminals.

Each of the plurality of high-voltage generation circuits includes a high-voltage output terminal. When a single high-voltage generation circuit outputs a high voltage, even if the stability of the output voltage and the response speed are within specification ranges, when the plurality of high-voltage generation circuits output high voltages from their respective output terminals, the ripple of the output voltages becomes large. This is because adjacent high-voltage generation circuits are mutually affected by noise. In microchip electrophoresis, since analysis processing is performed in a state where high voltages are applied to a plurality of electrode terminals on the microchip, the ripple of the voltage output from the high-voltage generation circuit becomes large. If the ripple of the output voltage of the high-voltage generation circuit becomes large, the speed of substances moving by electrophoresis becomes unstable, which becomes a factor in reducing the separation accuracy of the sample.

Specifically, this is because a transformer used in the high-voltage generation circuit radiates inductive noise by generating a high voltage, affecting adjacent high-voltage generation circuits. Although it is conceivable to suppress the influence of noise by increasing the distance between the circuits, there are constraints due to the size of the apparatus, and it is difficult to secure a sufficient distance to reduce the influence of inductive noise.

An object of the present invention is to reduce the influence of noise received from adjacent high-voltage generation circuits in a power supply device that supplies a high voltage to a microchip electrophoresis system.

### MEANS FOR SOLVING THE PROBLEMS

A high-voltage power supply device for a microchip electrophoresis system according to one aspect of the present invention is a high-voltage power supply device capable of supplying a high voltage to a microchip electrophoresis system, comprising: a circuit board; a plurality of high-voltage generation circuits arranged on a first surface of the circuit board; and a plate-shaped shield part arranged on the first surface side of the circuit board. Each high-voltage generation circuit has a transformer, the plurality of high-voltage generation circuits are arranged between the first surface of the circuit board and the shield part, and a plate surface of the shield part is arranged parallel to a coil axis of each transformer.

The present invention is also directed to a microchip electrophoresis system comprising the above-described high-voltage power supply device.

### EFFECTS OF THE INVENTION

According to the present invention, in a power supply device that supplies a high voltage to a microchip electrophoresis system, it is possible to reduce the influence of noise received from adjacent high-voltage generation circuits.

### BRIEF DESCRIPTION OF DRAWINGS

[Fig. 1] Fig. 1 is an overall view of a microchip electrophoresis system according to the present embodiment.
[Fig. 2] Fig. 2 is a diagram showing an internal structure of a microchip.
[Fig. 3] Fig. 3 is a plan view showing a high-voltage power supply device according to the present embodiment.
[Fig. 4] Fig. 4 is a IV-IV side cross-sectional view of the high-voltage power supply device shown in Fig. 3.

### DESCRIPTION OF EMBODIMENTS

Next, configurations of a high-voltage power supply device 1 for a microchip electrophoresis system and a microchip electrophoresis system ME according to an embodiment of the present invention will be described with reference to the accompanying drawings.

### (1) Overall Configuration of Microchip electrophoresis system

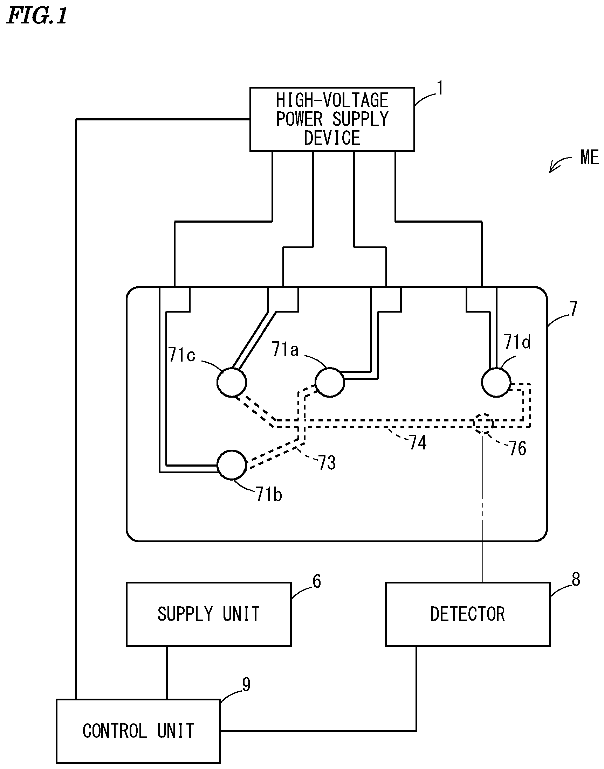

Fig. 1 is an overall view showing the microchip electrophoresis system ME according to the present embodiment. The microchip electrophoresis system ME includes a high-voltage power supply device 1, a supply unit 6, a microchip 7, a detector 8, and a control unit 9. The high-voltage power supply device 1 is an example of a high-voltage power supply device for a microchip electrophoresis system according to the present invention.

The high-voltage power supply device 1 applies high voltages to a plurality of electrode terminals provided on the microchip 7. The supply unit 6 supplies a sample solution to be analyzed, a separation buffer, a cleaning liquid, and the like to the microchip 7. The microchip 7 holds the sample solution to be analyzed. Components (charged substances) contained in the sample solution held in the microchip 7 move and separate by electrophoresis. The detector 8 detects components moved and separated by electrophoresis in the microchip 7. The control unit 9 controls each functional unit of the microchip electrophoresis system ME, including the high-voltage power supply device 1, the supply unit 6, and the detector 8.

### (2) Configuration of Microchip

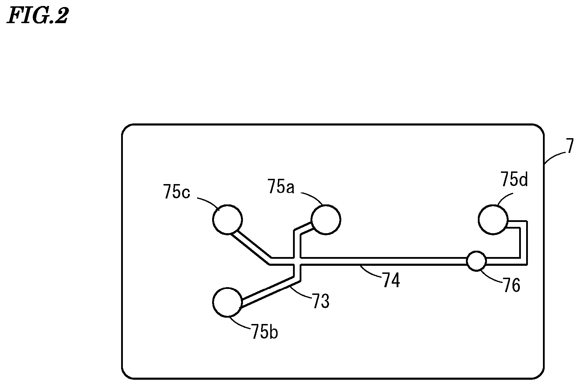

The configuration of the microchip 7 will be described with reference to Figs. 1 and 2. As shown in Fig. 1, the microchip 7 is composed of a substantially rectangular plate-shaped part. Four electrode terminals 71a, 71b, 71c, and 71d are arranged on a plate surface of the microchip 7. The four electrode terminals 71a to 71d are respectively connected to the high-voltage power supply device 1. Thereby, high voltages can be respectively applied to the electrode terminals 71a to 71d by the high-voltage power supply device 1.

Fig. 2 is a diagram showing the internal structure of the microchip 7. As shown in Fig. 2, two flow paths (capillaries) 73 and 74 in which the sample solution is held are formed inside the microchip 7. The flow path 73 and the flow path 74 intersect each other, forming a cross-shaped flow path as a whole. The flow path 73 is used to guide the sample solution to be analyzed to the flow path 74. The flow path 74 is used as a separation flow path for separating the sample solution to be analyzed by electrophoresis.

Reservoirs 75a and 75b are provided at both ends of the flow path 73. Reservoirs 75c and 75d are provided at both ends of the flow path 74. The reservoirs 75a, 75b, 75c, and 75d are spaces for supply and suction of the separation buffer and the sample solution. The reservoirs 75a, 75b, 75c, and 75d have cylindrical spaces extending in a direction perpendicular to the plate surface of the microchip 7. The flow paths 73 and 74 and the reservoirs 75a to 75d having such configurations are formed inside the microchip 7.

Further, as shown in Fig. 1, electrode terminals 71a and 71b are respectively arranged in the reservoirs 75a and 75b provided at both ends of the flow path 73. That is, the electrode terminals 71a and 71b are arranged at ends of the reservoirs 75a and 75b extending in the direction perpendicular to the plate surface of the microchip 7. Further, as shown in Fig. 1, electrode terminals 71c and 71d are respectively arranged in the reservoirs 75c and 75d provided at both ends of the flow path 74. Similarly, the electrode terminals 71c and 71d are arranged at ends of the reservoirs 75c and 75d extending in the direction perpendicular to the plate surface of the microchip 7.

In the microchip electrophoresis system ME, electrophoresis is performed by applying voltages from the high-voltage power supply device 1 to the electrode terminals 71a to 71d provided in the flow paths 73 and 74. The voltages applied to the electrode terminals 71a to 71d are controlled by the control unit 9.

Analysis processing of a sample using the microchip electrophoresis system ME is performed in the following procedure. First, the entire insides of the flow paths 73 and 74 are filled with the separation buffer by the supply unit 6. The separation buffer is also used as a "separation medium" and includes, for example, a pH buffer and a water-soluble polymer (cellulosic polymer or the like). Next, the sample solution to be analyzed is supplied to the reservoir 75a of the flow path 73 by the supply unit 6. A fluorescent dye is mixed in the sample solution. Then, predetermined voltages are applied to the electrode terminals 71a to 71d by the high-voltage power supply device 1, thereby applying an electric field gradient in the flow paths 73 and 74. Thereby, the sample solution moves inside the flow path 73 and moves to a position where the flow path 73 and the flow path 74 intersect. Thereafter, by changing magnitudes of the voltages applied to each of the electrode terminals 71a to 71d from the high-voltage power supply device 1, the sample solution moves toward the electrode terminal 71d (reservoir 75d) while being separated by electrophoresis in the flow path 74. For example, when the sample is a gene, since the gene has a negative charge, it moves toward an anode by applying an electric field.

In the analysis processing by electrophoresis, components contained in the sample solution move in the flow path 74 at different speeds for each component depending on their sizes. For example, the moving speed of a gene is inversely proportional to the radius of the gene. Thereby, the size of the gene can be identified from the applied voltage value and arrival time. In the microchip electrophoresis system ME, the detector 8 detects components arriving sequentially at a detection position 76 in the flow path 74. In this way, in the microchip electrophoresis system ME, components contained in the sample solution are detected for each degree of separation (degree of migration).

The detector 8 detects, for example, fluorescence of components separated by electrophoresis. The detector 8 has an LED (light emitting diode) that irradiates the detection position 76 of the flow path 74 with excitation light. Then, by irradiating each component moving in the flow path 74 while being separated by electrophoresis with the excitation light from the LED, each component is excited and emits fluorescence. The detector 8 detects the components separated by electrophoresis by measuring this fluorescence with a photomultiplier tube via, for example, an optical fiber and a filter part.

### (3) Configuration of High-Voltage Power Supply Device

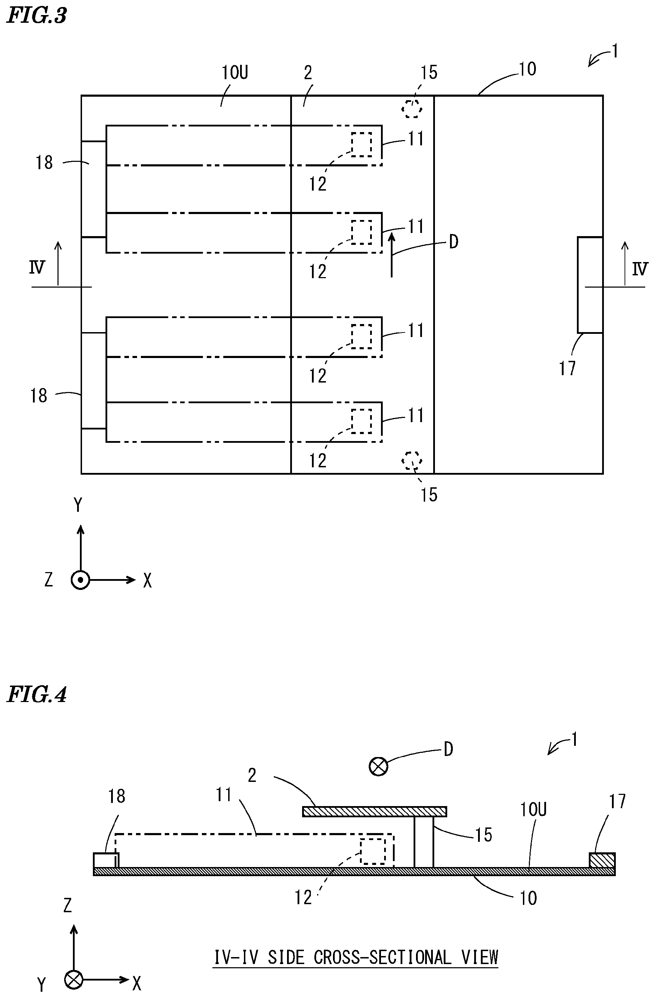

Next, the configuration of the high-voltage power supply device 1 according to the present embodiment will be described with reference to Figs. 3 and 4. Fig. 3 is a plan view showing the high-voltage power supply device 1 according to the present embodiment. Fig. 4 is a IV-IV side cross-sectional view of the high-voltage power supply device 1 shown in Fig. 3. Although the vertical direction and the like are not particularly determined in the high-voltage power supply device 1, in the following description, for convenience, the XY plane in Figs. 3 and 4 is defined as the horizontal direction of the high-voltage power supply device 1, and the Z direction is defined as the upward direction of the high-voltage power supply device 1.

As shown in Figs. 3 and 4, four high-voltage generation circuits 11 are arranged on an upper surface 10U of a circuit board 10 of the high-voltage power supply device 1. The upper surface 10U of the circuit board 10 is an example of a first surface in the present invention. The circuit board 10 is arranged parallel to the XY plane. Therefore, the upper surface 10U (first surface) of the circuit board 10 is also parallel to the XY plane. Each of the four high-voltage generation circuits 11 has a transformer 12. The four high-voltage generation circuits 11 correspond to the four electrode terminals 71a to 71d of the microchip 7 described above. By individually controlling the four high-voltage generation circuits 11 by the control unit 9, high voltages can be applied to the four electrode terminals 71a to 71d.

An input terminal 17 and an output terminal 18 are provided on the circuit board 10 of the high-voltage power supply device 1. Electric power input from the input terminal 17 is voltage-converted in the transformer 12 of the high-voltage generation circuit 11, and then output from the output terminal 18. The output terminal 18 is connected to the electrode terminals 71a to 71d of the microchip 7 shown in Fig. 1 via an output line.

As shown in Fig. 3, the high-voltage power supply device 1 includes two spacers 15. Holes for providing the spacers 15 are arranged at two locations on the circuit board 10. As shown in Fig. 4, the spacer 15 is a columnar part, and the two spacers 15 support a shield part 2. The shield part 2 is a plate having a rectangular shape in a plan view. In the present embodiment, the shield part 2 is composed of a copper part. The two spacers 15 are composed of conductive parts, and lower ends of the spacers 15 are connected to GND via conductive parts formed on the circuit board 10.

In the present embodiment, since the circuit board 10 and the shield part 2 are arranged in parallel, the shield part 2 is also parallel to the XY plane. That is, the upper surface (first surface) 10U of the circuit board 10 and a plate surface of the shield part 2 are arranged in parallel. The length of the shield part 2 in the Y direction is substantially the same as the length of the circuit board 10 in the Y direction, and the shield part 2 covers the entire circuit board 10 regarding the Y direction. On the other hand, the length of the shield part 2 in the X direction is shorter than the length of the circuit board 10 in the X direction, and regarding the X direction, the shield part 2 has a length sufficient to cover the transformers 12. Thereby, in a plan view, the shield part 2 is arranged so as to overlap with the four transformers 12.

A direction D shown in Fig. 3 indicates an axial direction of the transformer 12. That is, a coil of the transformer 12 is wound around the direction D as an axis center. In the present embodiment, the direction D coincides with the Y direction. Therefore, the direction D of the axis of the transformer 12 is parallel to the upper surface 10U of the circuit board 10 and the plate surface of the shield part 2. In the present embodiment, the axial directions of the four transformers 12 are all the direction D. That is, the axial directions of the four transformers 12 are all the Y direction.

As described above, in the high-voltage power supply device 1 of the present embodiment, since the shield part 2 is provided above the transformers 12, the ripple of the voltage output from each high-voltage generation circuit 11 can be reduced. This is because a part of inductive noise radiated from the transformer 12 is consumed as energy inside the shield part 2. In particular, in the present embodiment, the plurality of transformers 12 are arranged between the upper surface (first surface) 10U of the circuit board 10 and the shield part 2, and the plate surface of the shield part 2 is arranged parallel to the coil axis of each transformer 12, so that the influence of mutual noise between the high-voltage generation circuits 11 can be effectively reduced. That is, inductive noise mutually arriving between adjacent high-voltage generation circuits 11 is reduced, and the ripple of the output voltage can be reduced, similar to the case where a single high-voltage generation circuit 11 outputs a high voltage from a single output terminal.

Further, in the above embodiment, since the coil axes of the respective transformers 12 are all arranged along the direction D (common first direction), inductive noise mutually arriving between adjacent high-voltage generation circuits 11 is more effectively reduced. Further, when viewed from a direction perpendicular to the upper surface (first surface) 10U of the circuit board 10, the shield part 2 and all four transformers 12 overlap. That is, since the shield part 2 covers the entirety of the four transformers 12 in a plan view, inductive noise radiated from the transformers 12 is effectively consumed in the shield part 2.

Further, in the present embodiment, since the shield part 2 is connected to the GND of the circuit board 10 via the spacers 15, energy of the inductive noise radiated from the transformers 12 flows from the shield part 2 to the GND via the spacers 15.

### (4) Other Embodiments

In the above embodiment, the microchip electrophoresis system ME including one set of the microchip 7 and the high-voltage power supply device 1 has been described as an example. The present invention is similarly applicable to a case where the microchip electrophoresis system ME includes a plurality of microchips 7. When the microchip electrophoresis system ME includes a plurality of microchips 7, a plurality of high-voltage power supply devices 1 are provided corresponding to the plurality of microchips 7. By providing the plurality of high-voltage power supply devices 1 with the configuration described in the above embodiment, the high-voltage generation circuit 11 included in each high-voltage power supply device 1 can supply a voltage with small ripple to each microchip 7.

As described in the above embodiment, since the shield part 2 causes the energy of the inductive noise to flow to the GND of the circuit board 10, it is composed of a conductive part such as copper, for example. Therefore, for example, the shield part 2 may be manufactured using a part of a circuit board material used for manufacturing the circuit board 10. Thereby, since a part of a waste part generated when manufacturing the circuit board 10 can be used, it is possible to contribute to cost reduction.

In the above embodiment, the case where the length of the shield part 2 in the Y direction is the same as the length of the circuit board 10 in the Y direction has been described as an example. The length of the shield part 2 in the Y direction is not limited to this example, and may be shorter or longer than the length of the circuit board 10 in the Y direction. However, it is desirable that the shield part 2 has a length in the Y direction sufficient to overlap with all the transformers 12 when viewed from a direction perpendicular to the upper surface 10U of the circuit board 10.

### (5) Aspects

It is understood by those skilled in the art that the plurality of exemplary embodiments described above are specific examples of the following aspects.

### (Item 1)

A high-voltage power supply device for a microchip electrophoresis system according to one aspect of the present invention is a high-voltage power supply device capable of supplying a high voltage to a microchip electrophoresis system, comprising: a circuit board; a plurality of high-voltage generation circuits arranged on a first surface of the circuit board; and a plate-shaped shield part arranged on the first surface side of the circuit board, wherein each high-voltage generation circuit has a transformer, the plurality of high-voltage generation circuits are arranged between the first surface of the circuit board and the shield part, and a plate surface of the shield part is arranged parallel to a coil axis of each transformer.

In the power supply device supplying a high voltage to the microchip electrophoresis system, it is possible to reduce the influence of noise received by the high-voltage generation circuit.

### (Item 2)

The high-voltage power supply device for a microchip electrophoresis system according to Item 1, wherein a coil axis of each transformer may be arranged along a common first direction.

It is possible to effectively reduce the influence of noise received by the high-voltage generation circuit.

### (Item 3)

The high-voltage power supply device for a microchip electrophoresis system according to Item 1, wherein a coil axis of each transformer may be arranged parallel to the first surface.

A structure in which the circuit board and the shield part are arranged in parallel is provided, and it is possible to effectively reduce the influence of noise received by the high-voltage generation circuit.

### (Item 4)

The high-voltage power supply device for a microchip electrophoresis system according to Item 1, wherein the shield part and each transformer may overlap when viewed from a direction perpendicular to the first surface.

Since each transformer is covered by the shield part, it is possible to effectively reduce the influence of noise received by the high-voltage generation circuit.

### (Item 5)

The high-voltage power supply device for a microchip electrophoresis system according to Item 1, wherein the shield part may be connected to GND of the circuit board via a spacer.

Energy of noise received by the shield part can be released to the circuit board side.

### (Item 6)

The high-voltage power supply device for a microchip electrophoresis system according to Item 1, wherein each high-voltage generation circuit may be used to supply a high voltage to any one of a plurality of electrode terminals provided at ends of a flow path provided in the microchip electrophoresis system.

Ripple of the voltage supplied to each electrode terminal of the microchip becomes small, and analysis accuracy is improved.

### (Item 7)

The high-voltage power supply device for a microchip electrophoresis system according to Item 1, wherein the shield part may contain copper.

Inductive noise generated from the transformer can be effectively consumed.

### (Item 8)

The high-voltage power supply device for a microchip electrophoresis system according to Item 1, wherein the shield part may contain the same part as the circuit board.

Waste material generated during manufacturing of the circuit board can be effectively utilized.

### (Item 9)

A microchip electrophoresis system according to another aspect of the present invention comprises the high-voltage power supply device for a microchip electrophoresis system according to any one of Items 1 to 8.

It is possible to provide a microchip electrophoresis system with high analysis accuracy.

## Claims

1. A high-voltage power supply device capable of supplying a high voltage to a microchip electrophoresis system, comprising:
a circuit board;
a plurality of high-voltage generation circuits arranged on a first surface of the circuit board; and
a plate-shaped shield part arranged on the first surface side of the circuit board, wherein
each high-voltage generation circuit has a transformer,
the plurality of high-voltage generation circuits are arranged between the first surface of the circuit board and the shield part, and a plate surface of the shield part is arranged parallel to a coil axis of each transformer.

2. The high-voltage power supply device for a microchip electrophoresis system according to claim 1, wherein a coil axis of each transformer is arranged along a common first direction.

3. The high-voltage power supply device for a microchip electrophoresis system according to claim 1, wherein a coil axis of each transformer is arranged parallel to the first surface.

4. The high-voltage power supply device for a microchip electrophoresis system according to claim 1, wherein the shield part and each transformer overlap when viewed from a direction perpendicular to the first surface.

5. The high-voltage power supply device for a microchip electrophoresis system according to claim 1, wherein the shield part is connected to GND of the circuit board via a spacer.

6. The high-voltage power supply device for a microchip electrophoresis system according to claim 1, wherein each high-voltage generation circuit is used to supply a high voltage to any one of a plurality of electrode terminals provided at ends of a flow path provided in the microchip electrophoresis system.

7. The high-voltage power supply device for a microchip electrophoresis system according to claim 1, wherein the shield part contains copper.

8. The high-voltage power supply device for a microchip electrophoresis system according to claim 1, wherein the shield part contains the same part as the circuit board.

9. A microchip electrophoresis system comprising the high-voltage power supply device for a microchip electrophoresis system according to any one of claims 1 to 8.
